# EUROPEAN PATENT SPECIFICATION

(11) **EP 4 495 014 B1**
(45) Date of publication and mention of the grant of the patent: **06.05.2026**
(21) Application number: 23306266.0
(22) Date of filing: 21.07.2023
(51) Int. Cl.: B64F 5/40, B29C 73/10

(54) **METHOD FOR REPAIRING AN AIRCRAFT STRUCTURE, AND REPAIRED AIRCRAFT STRUCTURE**
VERFAHREN ZUR REPARATUR EINER FLUGZEUGSTRUKTUR UND REPARIERTE FLUGZEUGSTRUKTUR
PROCÉDÉ DE RÉPARATION D'UNE STRUCTURE D'AÉRONEF, ET STRUCTURE D'AÉRONEF RÉPARÉ

(43) Date of publication of application: 22.01.2025
(73) Proprietor: Airbus Operations GmbH, 21129 Hamburg (DE); Airbus Operations SAS, 31060 Toulouse (FR)
(72) Inventor: Domenico, Furfari, 21129 Hamburg (DE); Schneider, Daniel D., 21129 Hamburg (DE); Bouchet, Régis, 31060 Toulouse (FR)
(74) Representative: Marschall, Stefan

(56) References cited:
- CN-A- 115 230 984
- CN-A- 115 255 804
- CN-A- 116 275 654
- US-A1- 2017 369 187

## Description

The present invention addresses a method for repairing a damaged aircraft structure. The invention further concerns a repaired aircraft structure.

Aircraft structures such as a skin of a nacelle inlet bowl, of a tail or of a wing, are often prone to accidental damages such as dents, corrosions, or scratches. Such damages potentially increase the Aircraft on Ground (AoG) risk of the fleet. The increase in the number of repairs because of those damages leads to a consequent increased risk of reducing operational reliability of the fleet and increased maintenance cost of the operators. For example, among the typical components of the nacelles, pylons and engine mounts, the air inlet, thrust reverser units and fan cowl are prone to accidental damages during the service life of the aircraft. When a respective aircraft is in long term parking, the engine air inlets are protected with covers creating environmental conditions (e.g., high humidity and moisture) that could cause the onset of corrosion damages. Moreover, various aircraft structures, in particular their skin are often subjected to dents or scratches caused by foreign object impacts during take off and landing operations. Such damages can be also created by mishandled tools used during normal maintenance operation.

Dents, scratches and/or corrosions damages must be removed prior to the aircraft re-entering in service. To this end, depending on the respective damage size and criticality, the damaged surfaces can be dressed out (e.g., dent dress-out) or reworked for a blend out removal of the damages, provided the static and fatigue strength of the damaged component is not compromised as the original certification requirements. If the damage is beyond the allowable damage limits as indicated in the SRM (Structural Repair Manual), the damaged part of the structure shall be completely removed (cut-out of the damage part), and an external doubler shall be installed which restores the static and fatigue strength of the component.

Conventionally, the load path across component structures and external repair doubler is established via standard fastening joints. To fulfil the aerodynamic constraints for the respective aircraft structure, such external doubler repair solutions based on fastening techniques require a so-called "flush repair". This implies the use of many fasteners, the installation of which requires a high expenditure of time and work. Moreover, although the fastening repair solution is commonly used and is a very reliable means to restore the integrity of the damaged structures as per the original certification requirements, because of the multi-lines of fasteners and no painting requirement of the structures, repair is very visible. Prior art is also shown in CN 116 275 654 A which discloses, according to its abstract, an in-situ first-aid repair method for broken hole damage of a duralumin main load-bearing structure of an airplane. The repair method comprises the following specific process steps: S1, preparation before maintenance; s2, trimming the broken hole; s3, processing a prefabricated patch; s4, welding the patch and the cutting hole.

US 2017/369187 A1 discloses, according to its abstract, discloses a method of repairing including the steps of removing material from the substrate around the damage site to form a recess, and cold spraying particulate material into the recess to form a bead of deposited material.

It is an object of the present invention to provide an improved technique for repairing a damaged aircraft structure, and a repaired aircraft structure.

The object is achieved by a method according to claim 1 and by a repaired aircraft structure according to claim 11. Advantageous embodiments are disclosed in the dependent claims, the description and the figures.

A method according to the present invention serves to repair a damaged structure of an aircraft, further referred to as aircraft structure.

The method comprises the step of forming a cut-out in the aircraft structure, whereby a portion of the aircraft structure which includes a damage (such as at least one scratch, dent and/or corrosion damage) is removed. The method further comprises the step of closing the cut-out with a repair patch fitting in the cut-out, wherein a groove is formed along an edge of the repair patch running along an edge of the aircraft structure at the cut-out. The aircraft structure and the repair patch are then joined to each other by using cold spray powder deposition technique, as powder material is cold sprayed into the groove. Thereby, the groove or at least a section thereof may preferably be completely filled with said deposited powder material. The repair patch comprises at least one lip which overlaps an edge region of the aircraft structure enclosing the repair patch (when the repair patch closes the cut-out). Thereby, an exact positioning of the repair patch is ensured after this has been inserted into the cut-out and before and during the joining by cold spraying.

A repaired aircraft structure according to the present invention comprises a repair patch and an aircraft structure (which thus is a sub-structure of the repaired aircraft structure, in particular a portion of a originally undamaged aircraft structure) enclosing the repair patch. Accordingly, the repair patch closes a cut-out in the aircraft structure. Therein, the repair patch and the aircraft structure are joined to each other by cold spray deposited powder material. The cold spray deposited powder material may preferably be arranged in a groove formed along an edge of the repair patch running along an edge of the aircraft structure.

In particular, the repaired aircraft structure may result from the aircraft structure being repaired by way of a method according to an embodiment of the present invention.

The present invention thus provides a repair technique and a repaired aircraft structure avoiding installation of fasteners, in particular, the corresponding drilling and deburring operations, or at least reducing a number thereof. As a consequence, the repair is simplified, and a time needed for it is reduced. Moreover, onset of corrosion damages at the location of the repair patch can be prevented, which conventionally may result from the fastening joint installation, as the fasteners can be prone to humidity absorption in particular when sealant used during the fastener Installation is damaged or deteriorated due to environmental condition in service life of the aircraft.

Furthermore, contrary to material fusion technologies such as welding diffusion technique, the utilisation of cold spray powder deposition technique as per the present invention is well applicable also in case of materials such as aluminium (in particular aluminium series 2000) and/or for very thin aircraft structures, such as those typically involved at an engine air inlet. Indeed, while welding processes of thin structures are limited to only a structural thickness allowing the weld line to not damage or compromise the structural strength of the repair solution, the cold spraying applied according to the present invention does not involve material fusion, but solid state material deposition with powder particles never being in melting state and thus not requiring a minimum thickness of surface (of the aircraft structure) to which it is applied.

The present invention thus provides a significant value creation being able to reduce dramatically the lead time for repair embodiment versus state of the art repair by means of fastened technique and significant cost reduction as well as customer satisfaction with less aerodynamic impact versus bolted repair.

According to advantageous embodiments of the present invention, the cold spray deposited powder material is at least partially the same as a surface material of the aircraft structure (i.e., a material forming a surface of the aircraft structure) and/or as a surface material of the repair patch (i.e., a material forming a surface of the repair patch). Thereby, an advantageous strength of the joining can be achieved. In particular, the powder material and the surface of the aircraft structure may each comprise metal, in particular aluminium such as aluminium series 2000.

The cold spray deposited powder material preferably is deposited, in at least one continuous seeding line, along a complete profile of said edge of the repair patch forming the groove. Thereby, a load transfer and uniform load path across the component structure and repair patch restoring can be ensured, such that a structural integrity of the repaired aircraft structure can be achieved.

According to advantageous embodiments of the present invention, the aircraft is at least a portion of an aircraft's skin, such as a skin of a nacelle (in particular, of a nacelle inlet cowl), of a wing (in particular, of a leading edge of the wing), and/or of a tail (e.g., of a leading edge thereof).

During one or various or all steps of the method, the aircraft structure may remain integrated in the entire aircraft, and/or the aircraft structure may be disassembled during one or various or all (if applicable: other) steps of the method and re-integrated later on. In the latter case, the method may comprise disassembling the aircraft structure from the remaining aircraft and/or reintegrating the aircraft structure into the remaining aircraft.

At least at (or adjacent) the cut-out and/or - in the repaired state - at least adjacent the repair patch, the aircraft structure may have a thickness (measured orthogonally to a surface direction of the aircraft structure) of at most 2.5mm, at most 2mm, at most 1.5mm or even at most 1mm.

The repair patch may preferably be shaped as an external doubler (i.e., a copy/ clone) of the removed portion. It may thus have a same contour as the aircraft structure. Thereby, an original shape of the aircraft structure can be advantageously re-established by the repair. In particular, the repair patch may preferably follow an aerodynamic profile of the damaged aircraft structure.

The method according to the present invention may comprise producing the repair patch. Therein, the producing may comprise cutting the repair patch out of a twin (spare) component of the aircraft structure or preforming the repair patch (such as by moulding or additive manufacturing). In particular, the repair patch preferably is (at least partially) made of the same material (e.g., of metal, in particular of aluminium) as the removed portion of the aircraft structure.

Preferably, a sealant is positioned between the aircraft structure and the repair patch. In particular, the sealant may advantageously be positioned between respective positions of said edge of the aircraft structure and of said edge of the repair patch which form the groove.

In particular, the sealant may at least partially be positioned laterally between the repair patch and the aircraft structure, i.e., so as to narrow/diminish the cut-out. In embodiments where the repair patch comprises at least one lip overlapping an edge region of the aircraft structure as mentioned above, the sealant may (alternatively or additionally) be at least partially laid on said edge region. When the repair patch closes the cut-out, its lip may thus overlap also the sealant.

According to advantageous embodiments of the present invention, the aircraft structure and/or the repair patch has/have at least one chamfered edge. In particular, the groove may be advantageously formed by a chamfering at said edge of the aircraft structure (such chamfering further is referred to herein also as "aircraft structure chamfering") and/or by a chamfering at said edge of the repair patch (such chamfering is further referred to herein also as "patch chamfering"). The chamfering/s facilitate/s advantageous angles at which the powder material can be cold sprayed into the groove.

Specifically, the groove may be delimited by at least one flat and/or by at least one rounded surface. In particular, it may comprise at least a section having a rounded cross section (in particular, a cross section running along a circular section) and/or at least a section having a V-shaped cross section; in the latter case, the V-shaped cross section may preferably include an angle of at least 120° or at least 150°. Such shapes ensure an advantageous access of a cold spraying nozzle so as to provide for a uniform distribution and advantageous impact angles of the flowing particles. Therewith, an advantageous strength of the joining of the repair patch and the aircraft structure can be achieved.

In particular, the powder material is preferably cold sprayed into the groove with an angle between a cold spraying nozzle gun axis and the surface of the groove, the angle being in the range from 70° to 110° or even from 80° to 100°. Accordingly, the cold spraying nozzle is quasi-perpendicular to the respective surface it sprays.

The method according to the present invention may preferably comprise removing excess cold sprayed powder material overlaying the groove, e.g. by mechanical and/or manual machining such as sanding and/or using at least one abrasive polymer pad. Thereby, a smooth surface transition, in particular an aerodynamic surface can be realised between the repair patch and the aircraft structure. Analogously, a repaired aircraft structure according to the present invention preferably has a smooth surface transition, in particular an aerodynamic surface along the repair patch and the aircraft structure enclosing it.

According to advantageous embodiments of the method according to the present invention, the repair patch has at least one positioning means exceeding the removed portion of the aircraft structure. For instance, such positioning means may comprise a mechanical clamping system which may comprise one or more clip arm/s extending, when the repair patch has been inserted into the cut-out (and thereby closes it), on a surface of the aircraft structure.

The method may then further comprise removing the at least one positioning means after said joining of the aircraft structure and the repair patch.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Fig. 1a:: an aircraft structure after the step of forming a cut-out;
- Fig. 1b:: a repair patch to be inserted into the cut-out;
- Fig. 1c:: the step of closing the cut-out with the repair patch;
- Fig. 1d:: the aircraft structure with the cut-out being closed with the repair patch;
- Fig. 1e:: the step of joining the aircraft structure and the repair patch by cold spraying powder material into the groove as per an exemplary embodiment of the present invention;
- Fig. 1f:: the groove being filled with the cold spray deposited powder material;
- Fig. 1g:: the resulting repaired aircraft structure;
- Fig. 2a:: the step of joining the aircraft structure and the repair patch by cold spraying powder material into the groove as per another exemplary embodiment not according to the claims in a cross section; and
- Fig. 2b:: said joining step in a perspective view of a portion of the groove.

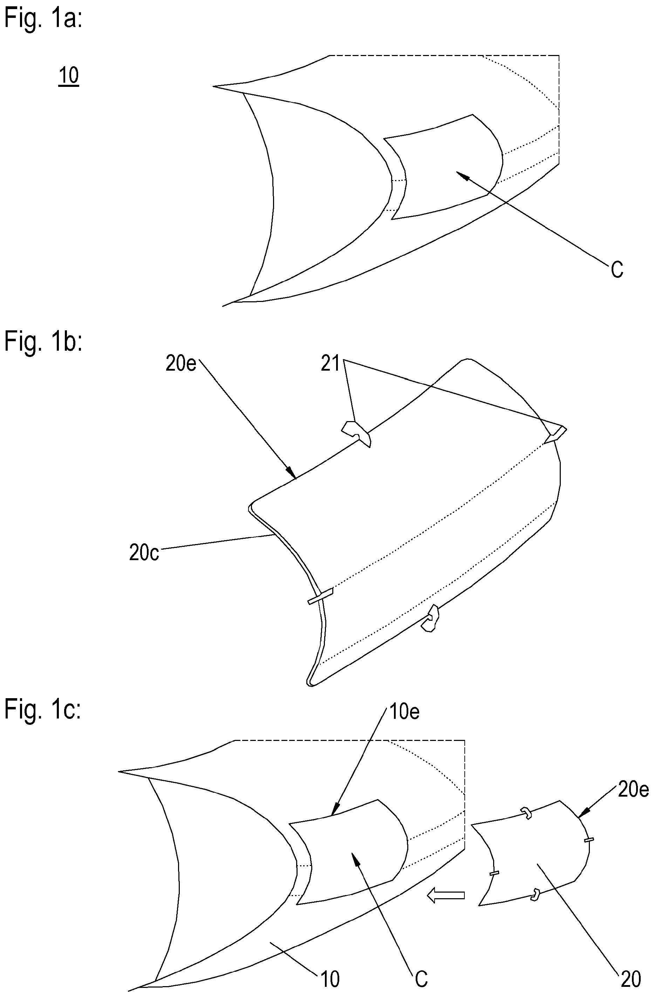

Figures 1a - 1g illustrate a method of repairing an aircraft structure 10 according to an exemplary embodiment of the present invention. In Figure 1a, a part of the aircraft structure 10 is shown in perspective view, wherein a portion including a damage (not shown) has been removed, thereby forming a cut-out C.

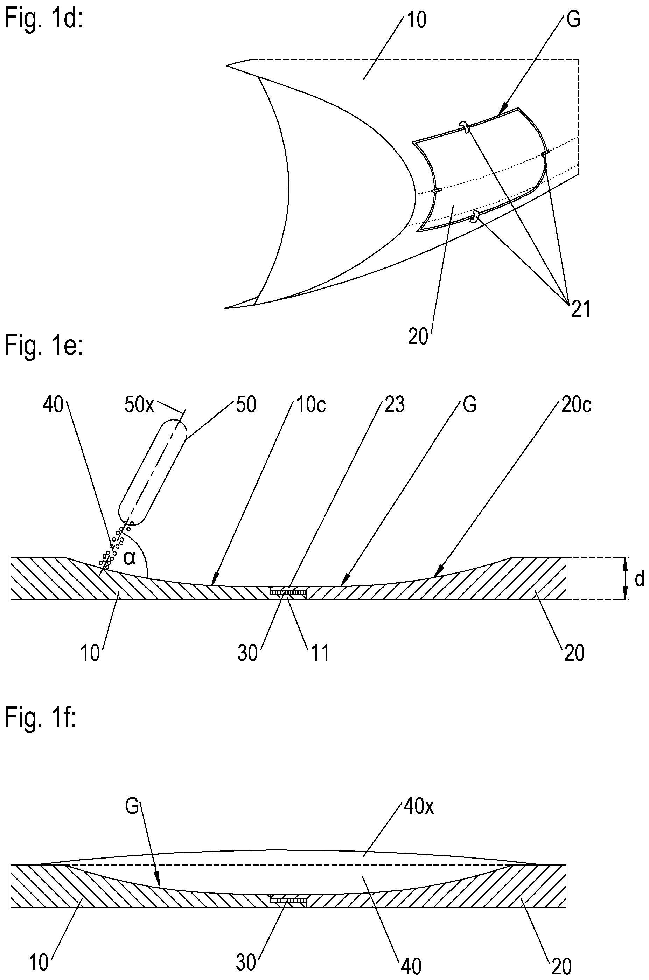

For instance, the aircraft structure 10 may be a portion of a skin of the aircraft, in particular of a skin of part of a nacelle inlet cowl, of a wing or of a tail of the aircraft (not shown). The thickness d of the aircraft structure, as referenced in Figure 1e (and measured orthogonally to a surface direction of the aircraft structure) may in particular be at most 2.5mm, at most 2mm, at most 1.5mm or even at most 1mm.

Figure 1b depicts (at another scale than Figure 1a) a repair patch 20 to be inserted into the cut-out. The repair patch is basically shaped as an external doubler (i.e., a copy/ clone) of the portion removed from the aircraft structure 10 shown in Figure 1a, so as to have a same contour as the aircraft structure, with positioning means 21 in addition which in the present case are configured as four clip arms projecting at different sides over an edge 20e of the repair patch 20. For instance, the repair patch may have been preformed or cut out of a twin (spare) component of the aircraft structure (not shown), wherein the positioning means 21 may have been subsequently attached. The positioning means 21 are configured to keep the repair patch in place before and during the cold spraying.

The repair patch 20 has a patch chamfering 20c at its edge 20e. As a consequence, once the repair patch 20 has been inserted into the cut-out C, with the positioning means 21 extending on a surface of the aircraft structure 10, as illustrated in Figures 1c and 1d, a groove G is formed along the edge 20e of the repair patch running along an edge 10e of the aircraft structure at the cut-out C, as best seen in Figure 1e showing the transition of the aircraft structure 10 and the repair patch 20 in a cross section.

As further visible in Figure 1e, the edge 10e of the aircraft structure likewise has a chamfering 10c. In the exemplary case/ section of the groove depicted, both the aircraft structure chamfering 10c and the patch chamfering 20c are shaped as arcs, in particular as segments of a common circle. The groove G thus has a rounded cross section, such that a cold spraying nozzle 50 can be directed such that its gun axis 50x and a surface of the groove G include an angle α which is in the range of 70° to 110° or even 80° to 100°.

Accordingly, a cold sprayed powder material 40 applied by the cold spraying nozzle 50 can be uniformly distributed with advantageous impact angles in the groove G, so as to achieve an advantageous strength of the joining of the repair patch 20 and the aircraft structure 10.

In the exemplary embodiment shown in Figure 1e, the repair patch further has a step contour formed by a protruding lip 23 overlapping an edge region 11 of the aircraft structure, with a sealant 30 positioned in-between. By the lip 23, an exact positioning of the repair patch 20 in the cut-out C is ensured during the joining by cold spraying.

Figure 1f depicts the cross section of the groove G after this has been filled with the cold spray deposited powder material 40, by which the complete sealing of the respective runouts of the aircraft structure 10 and the repair patch 20 is covered. Therein, an excess cold sprayed powder material 40x overlays the groove, which in a further step (not shown) is preferably removed (e.g. by machining such as sanding), as are the positioning means 21. Thereby, a smooth surface transition, in particular an aerodynamic surface can be realised between the repair patch 20 and the aircraft structure 10.

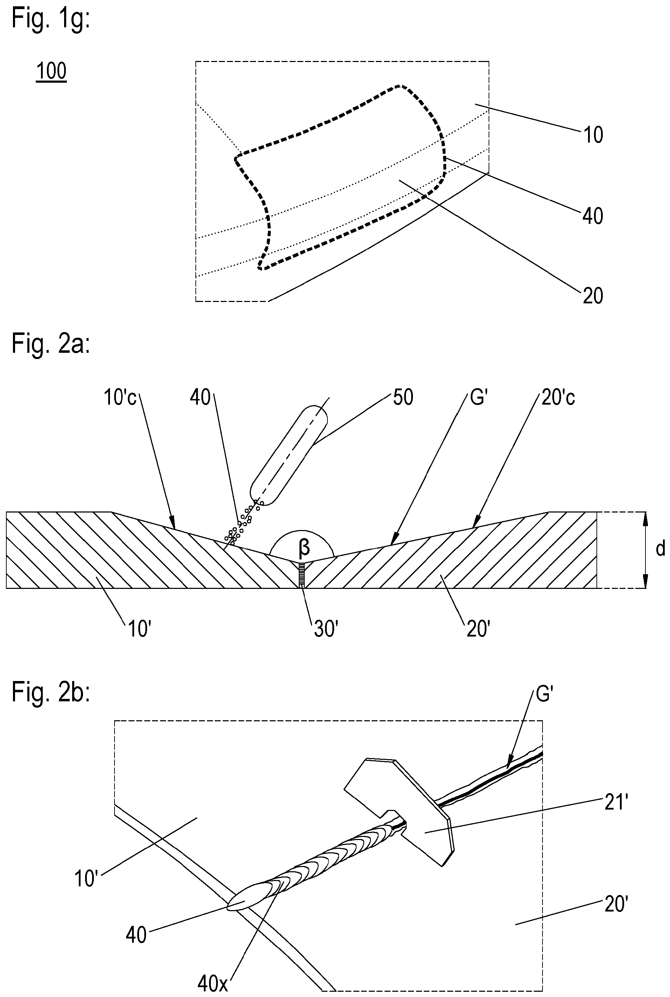

Figure 1g shows a resulting repaired aircraft structure 100 according to an embodiment of the present invention, which comprises the repair patch 20 enclosed by the aircraft structure 10 to which the repair patch 20 is joined by cold spray deposited powder material 40. Therein, a surface transition between the aircraft structure 10 and the repair patch 20 is smooth, such that an original aerodynamic profile of the undamaged aircraft structure (i.e., prior to the damage and its repair) is re-established.

In Figure 2a, 2b, which show embodiments not according to the claims, the step of joining an aircraft structure 10' and a repair patch 20' having alternatively shaped chamferings 10'c, 20'c is illustrated: In this case, the groove G' has a V-shaped cross section. Preferably, the included angle β is at least 120° or even at least 150°, whereby advantageous impact angles of the flowing particles of the cold sprayed powder material 40 are achieved as mentioned above.

In the embodiment shown in Figures 2a, 2b, a sealant 30' is positioned laterally between the repair patch 20' and the aircraft structure 10', i.e., so as to narrow/diminish the cut-out.

Excess cold sprayed powder material 40x and positioning means 21' depicted in Figure 2b as extending over a surface of the aircraft structure 10' preferably are removed (not shown) after the cold spraying, e.g. by a final machining or mechanical or manual rework. Therein, in particular sand paper or at least one abrasive polymer pad may be applied.

Disclosed is a method for repairing a damaged aircraft structure 10, 10'. The method comprises forming a cut-out C in the aircraft structure by removing a portion thereof which includes a damage, and closing the cut-out C with a repair patch 20, whereby a groove G, G' is formed along an edge 20e of the repair patch running along an edge 10e of the aircraft structure at the cut-out. The aircraft structure 10, 10' and the repair patch 20, 20' are joined to each other by cold spraying powder material 40 into the groove G, G'.

Further disclosed is a repaired aircraft structure 100 comprising a repair patch 20, 20', an aircraft structure 10, 10' enclosing the repair patch 20, 20', and cold spray deposited powder material 40 joining the aircraft structure 10, 10' and the repair patch 20, 20'.

### References

10, 10' aircraft structure
10c, 10'c aircraft structure chamfering
10e edge of the aircraft structure at the cut-out
11 overlapped edge region
20, 20' repair patch
20c, 20'c patch chamfering
20e edge of the repair patch
21 positioning means
23 lip
30, 30' sealing
40 cold sprayed powder material
40x excess cold sprayed powder material
50 spraying nozzle
50x gun axis of cold spraying nozzle 50
d thickness of aircraft structure
C cut-out
G, G' groove

## Claims

1. Method for repairing a damaged aircraft structure (10, 10'), the method comprising
- forming a cut-out (C) in the aircraft structure by removing a portion thereof which includes a damage;
- closing the cut-out (C) with a repair patch (20), whereby a groove (G, G') is formed along an edge (20e) of the repair patch running along an edge (10e) of the aircraft structure at the cut-out; and
- joining the aircraft structure (10, 10') and the repair patch (20, 20') by cold spraying powder material (40) into the groove (G),
wherein
- the repair patch (20) comprises at least one lip (23) which when the repair patch closes the cut-out (C) overlaps an edge region (11) of the aircraft structure (10).

2. Method according to claim 1, wherein the groove (G, G') is formed by an aircraft structure chamfering (10c, 10'c) at said edge (10e) of the aircraft structure (10, 10') and/or by a patch chamfering (20c, 20'c) at said edge (20e) of the repair patch (20, 20').

3. Method according to one of claims 1 or 2, wherein the groove (G, G') comprises
- at least a section having a V-shaped cross section and/or
- at least a section having a rounded cross section.

4. Method according to one of the preceding claims, further comprising positioning a sealant (30, 30') between the aircraft structure (10, 10') and the repair patch (20, 20').

5. Method according to one of the preceding claims, wherein the powder material (40) is at least partially the same as a surface material of the aircraft structure (10, 10').

6. Method according to one of the preceding claims, further comprising producing the repair patch (20, 20'), the producing comprising
- cutting the repair patch out of a twin component of the aircraft structure (10, 10') or
- preforming the repair patch.

7. Method according to one of the preceding claims, wherein the repair patch has at least one positioning means (21, 21') exceeding the removed portion of the aircraft structure, wherein the method further comprises removing the at least one positioning means (21, 21') after said joining the aircraft structure and the repair patch.

8. Method according to one of the preceding claims, further comprising removing excess cold sprayed powder material (40x) overlaying the groove (G, G').

9. Method according to one of the preceding claims, wherein the aircraft structure (10, 10') is at least a portion of an aircraft's skin.

10. Method according to claim 9, wherein said portion forms part of a nacelle inlet cowl, of a wing, or of a tail of the aircraft.

11. Repaired aircraft structure (100) comprising an aircraft structure (10, 10') enclosing a repair patch (20, 20') wherein the repair patch (20) comprises at least one lip (23) which overlaps an edge region (11) of the aircraft structure (10), and cold spray deposited powder material (40) joining the aircraft structure (10, 10') and the repair patch (20, 20').

## Patentansprüche

1. Verfahren zur Reparatur einer beschädigten Flugzeugstruktur (10, 10'), wobei das Verfahren umfasst:
• Bilden eines Ausschnitts (c) in der Flugzeugstruktur durch Entfernen eines Bereichs, der einen Schaden aufweist;
• Schließen des Ausschnitts (C) mit einem Reparaturflicken (20), wobei entlang einer Kante (20e) des Reparaturflickens eine Nut (G, G') gebildet wird, die entlang einer Kante (10e) der Flugzeugstruktur bei dem Ausschnitt verläuft; und
• Verbinden der Flugzeugstruktur (10, 10') und des Reparaturflickens (20, 20') durch Kaltgasspritzen von Pulvermaterial (40') in die Nut (G),
wobei
• der Reparaturflicken (20) mindestens eine Lippe (23) aufweist, die beim Verschließen des Ausschnittes (C) durch den Reparaturflicken einen Randbereich (11) der Flugzeugstruktur (10) überlappt.

2. Verfahren nach Anspruch 1, bei dem die Nut (G, G') durch eine Flugzeugstrukturabschrägung (10c, 10'c) an der besagten Kante (10e) der Flugzeugstruktur (10, 10') und/oder durch eine Abschrägung (20c, 20'c) an der Kante (20e) des Reparaturflickens (20c, 20'c) gebildet wird.

3. Verfahren nach einem der Ansprüche 1 oder 2, wobei die Nut (G, G')
• mindestens einen Abschnitt mit V-förmigem Querschnitt und/oder
• mindestens einen Abschnitt mit abgerundetem Querschnitt aufweist.

4. Verfahren nach einem der vorherigen Ansprüche, des Weiteren mit einer Platzierung eines Dichtmittels (30, 30') zwischen der Flugzeugstruktur (10, 10') und dem Reparaturpatch (20, 20').

5. Verfahren nach einem der vorherigen Ansprüche, wobei das Pulvermaterial (40) zumindest teilweise mit dem Oberflächenmaterial der Flugzeugstruktur übereinstimmt (10, 10').

6. Verfahren nach einem der vorherigen Ansprüche, des Weiteren mit einer Herstellung des Reparaturflickens (20, 20'), wobei die Herstellung
• ein Herausschneiden des Reparaturflickens aus einer Zwillingskomponente der Flugzeugstruktur (10, 10') oder
• ein Vorformen des Reparaturflickens
umfasst.

7. Verfahren nach einem der vorherigen Ansprüche, wobei der Reparaturflicken mindestens eine Positioniermittel (21, 21') aufweist, das den entfernten Teil der Flugzeugstruktur überschreitet, wobei das Verfahren des Weiteren ein Entfernen von mindestens einem Positioniermittel (21, 21') nach dem Verbinden der Flugzeugstruktur und dem Reparaturflicken aufweist.

8. Verfahren nach einem der vorherigen Ansprüche, des Weiteren mit einem Entfernen von überschüssigem kaltgasgesprühten Pulvermaterial (40x), das die Nut (G, G') überdeckt.

9. Verfahren nach einem der vorherigen Ansprüche, wobei der die Flugzeugstruktur (10, 10') zumindest ein Teil der Flugzeughaut ist.

10. Verfahren nach Anspruch 9, wobei dieser Teil ein Teil einer Nacelle-Einlassverkleidung, eines Flügels oder eines Leitwerks des Flugzeugs ist.

11. Reparierte Flugzeugstruktur (100), mit einer Flugzeugstruktur (10, 10'), die einen Reparaturflicken beinhaltet (20, 20'), wobei der Reparaturflicken (20) mindestens eine Kante (23) aufweist, die einen Randbereich (11) der Flugzeugstruktur (10) überlappt, sowie mit kaltgespritztem Pulvermaterial (40), das die Flugzeugstruktur (10, 10') und den Reparaturflicken verbindet (20, 20').

## Revendications

1. Procédé de réparation d'une structure d'aéronef endommagée (10, 10'), ledit procédé comprenant
• la formation d'une découpe (C) dans la structure d'aéronef en retirant une partie de celle-ci qui comprend un dommage ;
• la fermeture de la découpe (C) à l'aide d'un patch de réparation (20), ce qui permet de former une rainure (G, G') le long d'un bord (20e) du patch de réparation s'étendant le long d'un bord (10e) de la structure d'aéronef au niveau de la découpe ; et
• l'assemblage de la structure d'aéronef (10, 10') et du patch de réparation (20, 20') par projection à froid d'un matériau en poudre (40) dans la rainure (G),
dans lequel
• le patch de réparation (20) comprend au moins une lèvre (23) qui, lorsque le patch de réparation ferme la découpe (C), recouvre une région de bord (11) de la structure de l'aéronef (10).

2. Procédé selon la revendication 1, dans lequel la rainure (G, G') est formée par un chanfreinage de la structure de l'aéronef (10c, 10'c) au niveau dudit bord (10e) de la structure d'aéronef (10, 10') et/ou par un chanfreinage de la pièce de réparation (20c, 20'c) au niveau dudit bord (20e) de la pièce de réparation (20, 20').

3. Procédé selon l'une des revendications 1 ou 2, dans lequel la rainure (G, G') comprend
• au moins une section présentant une section transversale en forme de V et/ou
• au moins une section présentant une section transversale arrondie.

4. Procédé selon l'une des revendications précédentes, comprenant en outre le positionnement d'un produit d'étanchéité (30, 30') entre la structure de l'aéronef (10, 10') et le patch de réparation (20, 20').

5. Procédé selon l'une des revendications précédentes, dans lequel le matériau en poudre (40) est au moins partiellement identique à un matériau de surface de la structure de l'aéronef (10, 10').

6. Procédé selon l'une des revendications précédentes, comprenant en outre la fabrication du patch de réparation (20, 20'), ladite fabrication comprenant
• la découpe du patch de réparation à partir d'un composant jumeau de la structure de l'aéronef (10, 10') ou
• le préformage du patch de réparation.

7. Procédé selon l'une des revendications précédentes, dans lequel le patch de réparation comporte au moins un moyen de positionnement (21, 21') dépassant de la partie retirée de la structure de l'aéronef, le procédé comprenant en outre le retrait dudit au moins un moyen de positionnement (21, 21') après ladite assemblage de la structure de l'aéronef et du patch de réparation.

8. Procédé selon l'une des revendications précédentes, comprenant en outre l'enlèvement de l'excès de matériau en poudre pulvérisé à froid (40x) recouvrant la rainure (G, G').

9. Procédé selon l'une des revendications précédentes, dans lequel la structure d'aéronef (10, 10') est au moins une partie du revêtement d'un aéronef.

10. Procédé selon la revendication 9, dans lequel ladite partie fait partie d'un capot d'entrée de nacelle, d'une aile ou d'une queue de l'aéronef.

11. Structure d'aéronef réparée (100) comprenant une structure d'aéronef (10, 10') renfermant un patch de réparation (20, 20'), dans laquelle le patch de réparation (20) comprend au moins une lèvre (23) qui recouvre une zone de bord (11) de la structure d'aéronef (10), et un matériau en poudre (40) déposé par projection à froid reliant la structure d'aéronef (10, 10') et la pièce de réparation (20, 20').
